# EUROPEAN PATENT APPLICATION

(11) **EP 3 521 924 A1**
(43) Date of publication of application: **07.08.2019**
(21) Application number: 17856480.3
(22) Date of filing: 29.09.2017
(51) Int. Cl.: G03B 21/60, G02B 5/00, G02B 5/02, G02F 1/17, G03B 21/00, H04N 5/74

(54) **OPTICAL SHEET, SCREEN, AND DISPLAY DEVICE**

(30) Priority: 30.09.2016 JP 2016193851; 07.04.2017 JP 2017076919
(71) Applicant: Dai Nippon Printing Co., Ltd., Tokyo 162-8001 (JP)
(72) Inventor: KUBOTA Shogo, Tokyo 162-8001 (JP); KURASHIGE Makio, Tokyo 162-8001 (JP); NAKATSUGAWA Kaori, Tokyo 162-8001 (JP)
(74) Representative: Müller-Boré & Partner Patentanwälte PartG mbB
(86) International application number: PCT/JP2017/035645
(87) International publication number: WO 2018/062533

(57) **Abstract**

Provided is an optical sheet which includes a plurality of particles and can sustain a speckle reduction effect over long periods of time, and which is used in a screen that is capable of displaying an image by being irradiated with light, the optical sheet including a particle layer having an insulating liquid, a holding layer, and a plurality of particles held rotatably in the holding layer. The particles include a first portion and a second portion, and are held in the holding layer so that the insulating liquid is present around the particles. The kinetic viscosity at 25°C of the insulating liquid is 5.5 mm²/s or less.

## Description

### [Technical Field]

The present disclosure relates to an optical sheet, and to a screen and a display device that utilize the optical sheet.

### [Background Art]

Projectors using coherent light sources are used conventionally. Laser light generated for instance from a laser light source is used as coherent light. In cases where image light emitted by a projector is formed by coherent light, speckle is observed on the screen onto which the image light is projected. Speckle, which is recognized as a spotted pattern of numerous dark and bright spots, detracts from the quality of the image that is displayed on the screen, and causes discomfort to the viewer. With a view to reducing speckle, a technique has been proposed conventionally that involves causing the incidence angle of image light, which strikes each position on the screen, to vary with time (see PTL 1). This technique allows reducing speckle through overlap of uncorrelated scattering patterns on the screen.

As a technique for reducing speckle, a screen for video projection has been proposed that is provided with: a light diffusion layer having charged light diffusion particles for diffusing projected light, and a dispersion medium for dispersing the light diffusion particles; and a pair of electrodes disposed so as to sandwich the light diffusion layer, in the optical axis direction of the projected light, wherein voltage is applied across the electrodes to thereby generate an electric field in the light diffusion layer and cause the light diffusion particles to move (see PTL 2).

### [Citation List]

### [Patent Literature]

[PTL 1] WO 2012/033174
[PTL 2] Japanese Patent Application Publication No. 2013-223176

### [Summary of Invention]

### [Technical Problem]

In the technique disclosed in PTL 2, a light diffusion layer made up of a plurality of accommodating bodies that accommodate, in the interior thereof, a plurality of light diffusion particles and a dispersion medium, is sandwiched between a pair of electrodes, and voltage is applied across the pair of electrodes that sandwich the light diffusion layer; as a result, the light diffusion particles included in the light diffusion layer can be caused to move, which in turn allows reducing speckle. Given that the light diffusion particles are accommodated in the interior of the accommodating bodies. However, charged light diffusion particles is fixed within the accommodating bodies as a result of repeated application of the electric field to the light diffusion layer, and the movement of the light diffusion particles is subdued. A problem arises therefore in that the speckle reduction effect elicited through movement of the light diffusion particles deteriorates according to the frequency of use of the screen.

Such being the case, it is an object of the present invention to provide an optical sheet, screen and display device containing a plurality of particles, and in which a speckle reduction effect can be sustained over long periods of time.

### [Solution to Problem]

In order to solve the above problems, one implementation of the present invention is an optical sheet used in a screen that is capable of displaying an image by being irradiated with light, the optical sheet including a particle layer having an insulating liquid, a holding layer, and a plurality of particles held rotatably in the holding layer, wherein the particles have a first portion and a second portion, or a first polymer portion as a first portion and a second polymer portion as a second portion, the particles being held in the holding layer so that the insulating liquid is present around the particles, and wherein the kinetic viscosity at 25°C of the insulating liquid is 5.5 mm²/s or less.

The first portion and the second portion may have mutually different relative permittivity; the kinetic viscosity of the insulating liquid can be set to lie in the range of 0.65 mm²/s to 5.5 mm²/s; the holding layer may have a plurality of holding sections that rotatably hold the plurality of particles, respectively; the particles may be of single color; either or both of the first portion and the second portion of the particles may be transparent; the volume ratio of the first portion of the particles may be higher than the volume ratio of the second portion of the particles; the first portion of the particles may have a light diffusion function; and the second portion of the particles may have a light absorption function.

As one implementation of the present invention there is provided a screen having the above optical sheet and electrodes that are applied with voltage to thereby form an electric field for causing the particles to rotate.

As an implementation of the present invention there is further provided a display device having a projector that emits coherent light, and the above screen. The display device may further have a power source for applying voltage to the electrodes of the screen, and a control device that controls the voltage applied to the electrodes from the power source. The control device may control the voltage applied to the electrodes from the power source in such a manner that the particles are caused to rotate repeatedly within a range of a rotation angle of the particles of smaller than 180°, and may control the orientation and/or position of the particles on the basis of voltage applied to the electrodes from the power source, so that at least part of the second portion is covered by the first portion, as viewed from an observer side in the normal direction of the screen.

### [Advantageous Effects of Invention]

The present invention succeeds in providing an optical sheet, screen and display device containing a plurality of particles, and in which a speckle reduction effect can be sustained over long periods of time.

### [Brief Description of Drawings]

Fig. 1 is a schematic configuration diagram illustrating a display device according to a first embodiment of the present invention.
Fig. 2 is a plan-view diagram illustrating a method for projecting image light from a projector of a display device onto a screen in the first embodiment of the present invention.
Fig. 3 is a cross-sectional diagram illustrating a schematic configuration of a screen in the first embodiment of the present invention.
Fig. 4 is a cross-sectional diagram (1) illustrating the schematic configuration of particles included in an optical sheet of the first embodiment of the present invention.
Fig. 5 is a cross-sectional diagram (2) illustrating the schematic configuration of particles included in an optical sheet of the first embodiment of the present invention.
Fig. 6 is a cross-sectional diagram (3) illustrating the schematic configuration of particles included in an optical sheet of the first embodiment of the present invention.
Fig. 7 is a graph illustrating a waveform of voltage applied across a first electrode and a second electrode in the first embodiment of the present invention.
Fig. 8 is a cross-sectional diagram illustrating another implementation (1) of the particles in the first embodiment of the present invention.
Fig. 9 is a cross-sectional diagram illustrating another implementation (2) of the particles in the first embodiment of the present invention.
Fig. 10 is a cross-sectional diagram illustrating another implementation (3) of the particles in the first embodiment of the present invention.
Fig. 11 is a cross-sectional diagram illustrating another implementation of a screen in the first embodiment of the present invention.
Fig. 12 is a schematic configuration diagram illustrating a display device according to a second embodiment of the present invention.
Fig. 13 is a cross-sectional diagram illustrating a schematic configuration of a screen in the second embodiment of the present invention.
Fig. 14 is a cross-sectional diagram (1) illustrating the schematic configuration of particles included in an optical sheet of the second embodiment of the present invention.
Fig. 15 is a cross-sectional diagram (2) illustrating the schematic configuration of particles included in an optical sheet of the second embodiment of the present invention.
Fig. 16 is a cross-sectional diagram (3) illustrating the schematic configuration of particles included in an optical sheet of the second embodiment of the present invention.
Fig. 17 is a schematic configuration diagram illustrating another implementation of a display device according to the second embodiment of the present invention.
Fig. 18 is a cross-sectional diagram illustrating another implementation of a screen in the first and second embodiments of the present invention.
Fig. 19A is a cross-sectional diagram illustrating another implementation of an optical sheet containing particles, in the first and second embodiments of the present invention.
Fig. 19B is a cross-sectional diagram illustrating another implementation of an optical sheet containing particles, in the first and second embodiments of the present invention.

### [Description of Embodiments]

Embodiments of the present invention will be explained next with reference to accompanying drawings. For instance, the shape, scale, vertical/horizontal dimensions of the values elements in the drawings attached to the present specification may be changed or exaggerated with respect to actual ones, for the purpose of facilitating understanding.

Herein the language "to" between numerical values denotes a range that includes, as a lower limit and an upper limit, the numerical values preceding and succeeding the language "to", respectively.

The terms "film", "sheet" and "plate" in the present specification and so forth are not distinguished from each other on the basis of differences in designation. For instance, "plate" encompasses conceptually also members that may be generally be referred to as "sheet" or "film".

### [First embodiment]

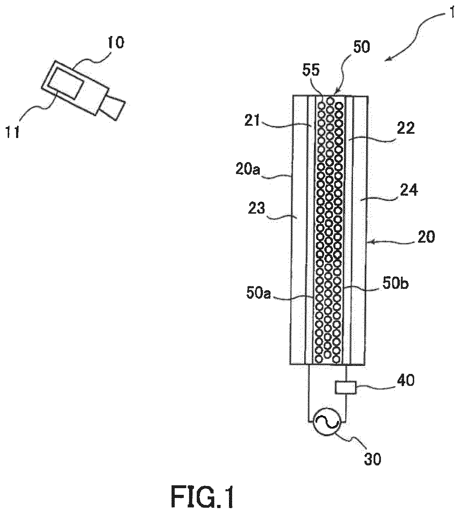

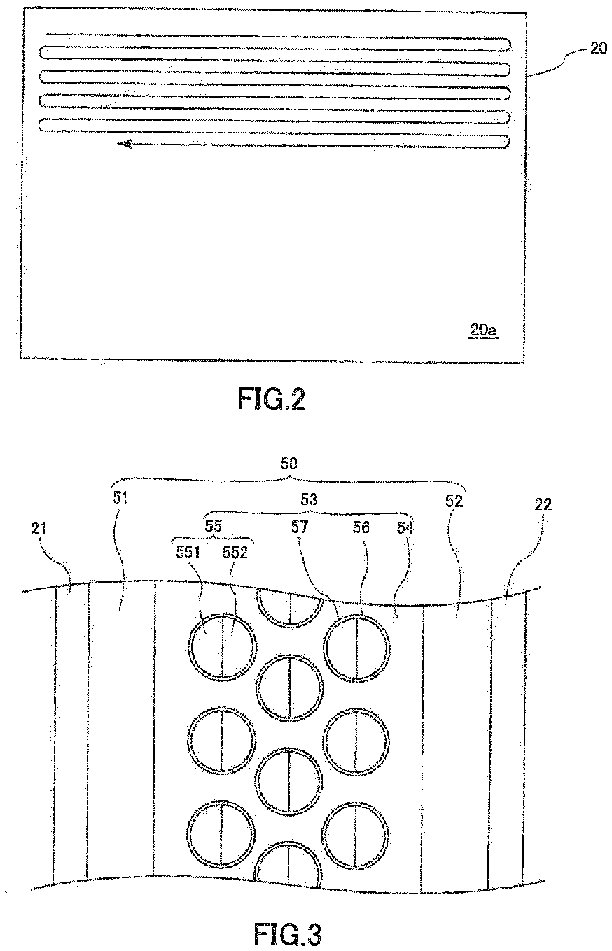

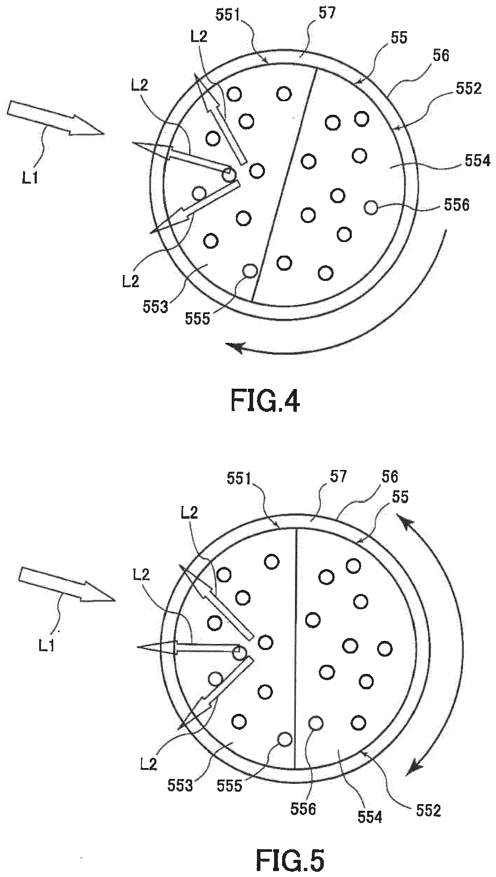

Fig. 1 is a schematic configuration diagram illustrating a display device according to a first embodiment; Fig. 2 is a plan-view diagram illustrating a method for projecting image light from a projector of a display device onto a screen in the first embodiment; Fig. 3 is a cross-sectional diagram illustrating a schematic configuration of a screen in the first embodiment; and Figs. 4 to 6 are cross-sectional diagrams illustrating the schematic configuration and action of particles included in an optical sheet of the first embodiment.

As illustrated in Fig. 1, the display device 1 according to the first embodiment is provided with: a projector 10; a screen 20 onto which image light (light for forming an image) is projected from the projector 10; a power source 30 that applies voltage to the screen 20; and a control device 40 that controls the voltage applied to the screen 20 from the power source 30.

The projector 10 that projects image light on the screen 20 has a coherent light source 11 that generates coherent light, and a scanning device (not shown) that adjusts the optical path of a coherent light source 11. Examples of the coherent light source 11 include laser light sources that generate laser light. The coherent light source 11 may be made up of a plurality of coherent light sources that generate light of mutually different wavelength regions.

The projector 10 of the first embodiment projects coherent light onto the screen 20 in accordance with a raster scanning scheme. The projector 10 projects (Fig. 2) coherent light so as to scan the entire screen 20 at high speed. The projector 10 projects coherent light only onto positions at which an image will be formed on the screen 20, in accordance with the image that is to be formed. An image is formed as a result on the screen 20. The operation of the projector 10 may be controlled by the control device 40, or may be controlled by a control device separate from the control device 40.

The screen 20 is provided with: an optical sheet 50 that has a first surface 50a and a second surface 50b opposing the first surface 50a; a first electrode 21 planarly spread out on the first surface 50a of the optical sheet 50; a second electrode 22 planarly spread out on the second surface 50b of the optical sheet 50; a first cover layer 23 that covers the first electrode 21 and forms one of the outermost surfaces of the screen 20; and a second cover layer 24 that covers the second electrode 22 and forms the other outermost surface of the screen 20. The first electrode 21 and the second electrode 22 are electrically connected to the power source 30.

The screen 20 in the first embodiment is a reflective screen, and the projector 10 projects image light onto a display surface 20a made up of the outer surface of the first cover layer 23. The image light projected on the display surface 20a is transmitted through the first cover layer 23 and the first electrode 21, and is diffusely reflected at the optical sheet 50. An observer facing the display surface 20a of the screen 20 can observe the image as a result.

The transmittance (visible light transmittance) of light in the visible light region of the first electrode 21 and the first cover layer 23 that transmit the image light is preferably 80% or higher, and preferably 84% or higher. The visible light transmittance in the first embodiment is defined as the average value of transmittance at each wavelength, upon measurement within a measurement wavelength in the range of 380 nm to 780 nm, using for instance a spectrophotometer (UV-3100PC, by Shimadzu Corporation).

Examples of the conductive material that makes up the first electrode 21 include ITO (indium tin oxide), InZnO (indium zinc oxide), Ag nanowires and carbon nanotubes. The first cover layer 23 is a layer for protecting the first electrode 21 and the optical sheet 50, and can be for instance made up of a transparent resin such as polyethylene terephthalate, polycarbonate or a cycloolefin polymer having superior stability.

The second electrode 22 and second cover layer 24 may have a configuration identical (identical visible light transmittance) to that of the first electrode 21 and the first cover layer 23, but may be not made up of a transparent material (material having visible light transmittance identical to that of the first electrode 21 and the first cover layer 23). For instance, the second electrode 22 may be made up of a metal thin film of aluminum, copper or the like. The second electrode 22, made up of a metal thin film, functions also as a reflective layer, in the reflective screen 20, that reflects image light having passed through the first cover layer 23, the first electrode 21 and the optical sheet 50.

As illustrated in Fig. 3, the optical sheet 50 has a first substrate 51, a second substrate 52, and a particle layer 53 provided between the first substrate 51 and the second substrate 52. The first substrate 51 supports the first electrode 21, and the second substrate 52 supports the second electrode 22. The particle layer 53 is sealed between the first substrate 51 and the second substrate 52. The first substrate 51 and the second substrate 52 can be made up of a material capable of sealing of the particle layer 53 and having enough strength so as to be capable of supporting the first electrode 21 and the second electrode 22. The first substrate 51 and the second substrate 52 can be made up for instance of a polyethylene terephthalate resin film. The screen 20 in the first embodiment is a screen of reflective type, such that at least the first substrate 51 is transparent enough to allow image light through, and preferably has the same visible light transmittance as that of the first electrode 21 and the first cover layer 23.

The particle layer 53 has a holding layer 54, and a plurality of particles 55 being rotatably held in the holding layer 54. In the first embodiment the holding layer 54 has a plurality of cavities 56 capable of accommodating respective particles 55. The internal dimension of the cavities 56 is larger than the outer dimension of the particles 55 accommodated in the cavities 56. As a result, the particles 55 can be held rotatably within the cavities 56 of the holding layer 54.

The holding layer 54 is swollen with an insulating liquid 57, such that the gaps between the holding layer 54 and the particles 55 in the cavities 56 are filled by the insulating liquid 57. The particles 55 in the cavities 56 can be allowed to rotate stably and smoothly thanks to swelling of the holding layer 54 with the insulating liquid 57.

The insulating liquid 57 in the first embodiment has a kinetic viscosity (25°C) of 5.5 mm²/s or less, preferably a kinetic viscosity (25°C) of 0.65 mm²/s to 5.5 mm²/s, and particularly preferably a kinetic viscosity (25°C) of 1.0 mm²/s to 3.0 mm²/s. A superior speckle reduction effect over long periods of time can be achieved by virtue of the fact that the kinetic viscosity (25°C) of the insulating liquid 57 is 5.5 mm²/s or less. Thanks to the fact that the kinetic viscosity (25°C) of the insulating liquid 57 is 0.65 mm²/s to 5.5 mm²/s, the insulating liquid 57 has low viscosity and is moderately non-volatile, and accordingly a yet more superior speckle reduction effect can be elicited over long periods of time. Unless otherwise stated, the kinetic viscosity (mm²/s) of the insulating liquid 57 is a value measured at a predetermined temperature using an Ubbelohde viscometer, on the basis of JIS Z8803.

In the first embodiment the kinetic viscosity of the insulating liquid 57 may be 5.5 mm²/s or less at the actual temperature of use of the optical sheet 50. In the case for instance where the screen 20 having the optical sheet 50 of the first embodiment is used in a low-temperature environment (for instance at - 20°C), the kinetic viscosity of the insulating liquid 57 at the above low temperature (-20°C) may be 5.5 mm²/s or less.

Likewise in a case where the screen 20 provided with the optical sheet 50 of the first embodiment is used in a high-temperature environment (for instance 50°C), the kinetic viscosity of the insulating liquid 57 at high temperature (50°C) may be 5.5 mm²/s or less. The optical sheet 50 (screen 20) used at low temperature (for example -20°C) can be installed for instance in a refrigerator, in a freezer, in an outdoor or indoor area at low temperature, or for instance inside a moving body such as a vehicle. The optical sheet 50 (screen 20) used as at a high temperature (for example 50°C) can be installed for instance in a heating cabinet, or in an outdoor or indoor area at a high temperature, or inside a moving body such as a vehicle.

Examples of the insulating liquid 57 include silicone oils such as dimethyl silicone oil or modified silicone oils, isoparaffin-based solvents, straight-chain paraffin-based solvents, straight-chain alkane-based solvents such as dodecane or tridecane, and mineral oil-based processing oils, as well as combinations of two or more of the foregoing. In particular, one type of silicone oil or a liquid prepared through mixing two or more types of silicone oil is preferably used as the insulating liquid 57.

For instance the holding layer 54 can be made up of an elastomer sheet containing an elastomer material. The holding layer 54 made up of the elastomer sheet can be swollen with the insulating liquid 57. Examples of the material of the elastomer sheet include silicone resins, (micro-crosslinked) acrylic resins, (micro-crosslinked) styrene resins and polyolefin resins.

The cavities 56 of the holding layer 54 are distributed at a high density in the in-plane direction of the screen 20, and are also distributed in the normal direction of the screen 20. In the implementation illustrated in Fig. 1 and Fig. 3, the cavities 56 are arrayed in parallel substantially uniformly in three rows along the in-plane direction of the screen 20, but the invention is not limited to that form.

The particles 55 held in the cavities 56 of the holding layer 54 have the function of modifying the direction of travel of the image light that is projected from the projector 10 i.e. the function of diffusely reflecting the image light. The particles 55 contain a first portion 551 and a second portion 552 of mutually different relative permittivity. A dipole moment is generated as a result within the particles 55, in an electric field. In this case, the particles 55 move so that the vector of the dipole moment of the particles 55 and the vector of the electric field are antiparallel. Therefore, when voltage is applied across the first electrode 21 and the second electrode 22, and an electric field is formed in the optical sheet 50 positioned between the first electrode 21 and the second electrode 22, the particles 55 rotate within the cavities 56 so as to take on a stable attitude with respect to the electric field (vector). The screen 20 in the first embodiment can modify a diffuse wavefront from the particles 55, which have a light diffusing function, accompanying the rotation of the particles 55. A speckle reduction effect is thus elicited in the first embodiment by virtue of the fact that the particles 55 rotate on account of the electric field formed in the optical sheet 50, as described below. It suffices accordingly that the relative permittivities of the first portion 551 and the second portion 552 be different enough that the particles 55 can rotate on account of the electric field formed in the optical sheet 50 and a speckle reduction effect is elicited thereby. Whether the relative permittivities of the first portion 551 and the second portion 552 are mutually different or not can be determined on the basis of whether the particles 55 can rotate or not on account of an electric field formed in the optical sheet 50.

The particles 55 having the first portion 551 and the second portion 552 of mutually different relative permittivity can be produced for instance in accordance with: a method (vapor deposition) that involves arranging spherical particles of organic matter or inorganic matter in the form of a single layer, using an adhesive tape or the like, and then vapor-depositing, on the spherical particles, a resin layer or inorganic layer that are charged positively or negatively, differently from the spherical particles; a method that involves using a rotating disk; a method that involves forming one droplet by bringing into contact in air, for instance by spraying or an ink-jet method, two types of droplet having mutually different relative permittivity; or a microchannel production method.

The microchannel production method allows forming the first portion 551 and the second portion 552 having mutually different relative permittivity using materials having mutually different charging characteristics. Specifically, dipole particles being bilayer polymer particles and having (±) polarity in terms of charge can be produced by using phases that include continuous phases and a particulate phase exhibiting an oily / aqueous (O/W type) or aqueous / oily (W/O type) relationship with respect to each other, and by sequentially discharging the continuous phases that contain two types of material having mutually different charging characteristics, out of a first microchannel into which continuous phases are conveyed, into a particulate phase of a flowing medium that flows in a second microchannel (see Japanese Patent Application Publication No. 2004-197083).

In the microchannel production method, a polymerizable resin component in phase-separated continuous phases that are insoluble in an oily or aqueous flowable medium containing a respective polymerizable resin component, are formed, in the flowable medium, out of polymerizable monomers that are charged positively or negatively, differently from each other; the polymerizable resin components in the continuous phases are conveyed in the first microchannel, and are then sequentially discharged, continuously or intermittently, into an aqueous or oily particulate phase flowing through the second microchannel. Next, the discharged product having been discharged into the particulate phase is made into particles during a discharge / dispersion / transport sequence within the microchannel; as a result, the particles 55 are then produced through polymerization and curing of the polymerizable resin component in the particles through UV irradiation and/or heating.

As the polymerizable resin components or polymerizable monomers utilized in the particles 55 there can be used monomer species that tend to exhibit (-) chargeability and (+) chargeability, respectively, in accordance with the type of functional group or substituent in the chemical structure of the polymerizable resin component or the polymerizable monomer. Therefore, in a case where at least two types of polymerizable monomer are used as the polymerizable resin components, the polymerizable monomers can be preferably used, as appropriate, in the form of a plurality of combinations of polymerizable monomers exhibiting similar chargeability, after an assessment of tendency of the respective monomers to exhibit (+) or (-) chargeability. Additives other than monomers, for instance a polymerization initiator, can be further added for adjustment, so long as the additives do not impair the chargeability of the material as a whole.

Examples of functional groups and/or substituents in the chemical structure of the polymerizable resin component or the polymerizable monomers include carbonyl groups, vinyl groups, phenyl groups, amino groups, amide groups, imide groups, hydroxyl groups, halogen groups, sulfonic acid groups, epoxy groups, urethane groups and (urethane bonds).

Examples of polymerizable monomers that tend to exhibit (-) chargeability include for instance phenyl (meth)acrylate and benzyl (meth)acrylate; 2-chloroethyl (meth)acrylate and the like; (meth)acrylonitrile and the like; glycidyl (meth)acrylate; for instance mono and alkyl glycidyl esters of dicarboxylic acids, such as mono or diglycidyl esters of maleic acid, mono or diglycidyl esters of fumaric acid, mono or diglycidyl esters of crotonic acid, mono or diglycidyl esters of tetrahydrophthalic acid, mono or diglycidyl esters of itaconic acid, mono or diglycidyl esters of butenetricarboxylic acid, mono or diglycidyl esters of citraconic acid, and mono or diglycidyl esters of allylsuccinic acid; for instance alkyl glycidyl esters of p-styrene carboxylic acid; 2-hydroxyethyl (meth)acrylate; 2-hydroxypropyl (meth)acrylate; mono esters of (meth)acrylic acid and polypropylene glycol or polyethylene glycol; for instance adducts of lactones and 2-hydroxyethyl (meth)acrylate; trifluorodimethyl (meth)acrylate, 2-trifluoromethyl ethyl (meth)acrylate, 2-perfluoromethyl ethyl (meth)acrylate, 2-perfluoroethyl-2-perfluorobutyl ethyl (meth)acrylate, 2-perfluoroethyl (meth)acrylate, perfluoromethyl (meth)acrylate, diperfluoromethyl methyl (meth)acrylate and the like; acrylic acid, methacrylic acid, tetrahydro phthalic acid, itaconic acid, citraconic acid, crotonic acid, maleic acid, fumaric acid, isocrotonic acid, norbornene dicarboxylic acid and bicyclo[2,2,1]hept-2-en-5,6-dicarboxylic acid; derivatives of the foregoing in the form of maleic anhydride, itaconic anhydride, citraconic anhydride, tetrahydrophthalic anhydride and bycyclo[2,2,1]hept-2-en-5,6-dicarboxylic acid anhydride; acid halides and the like; γ-methacryloxypropyl trimethoxysilane and the like; ethylene glycol diacrylate, diethylene glycol diacrylate, triethylene glycol diacrylate, polyethylene glycol diacrylate, dipropylene glycol diacrylate, tripropylene glycol diacrylate and the like; ethylene glycol dimethacrylate, diethylene glycol dimethacrylate, triethylene glycol dimethacrylate, polyethylene glycol diacrylate, propylene glycol dimethacrylate, dipropylene glycol dimethacrylate and tripropylene glycol dimethacrylate; styrene, methyl styrene, dimethyl styrene, trimethyl styrene, ethyl styrene, diethyl styrene, triethyl styrene, propyl styrene, butyl styrene, hexyl styrene, heptyl styrene, octyl styrene, fluorostyrene, chlorostyrene, bromostyrene, dibromostyrene, chloromethyl styrene, nitrostyrene, acetyl styrene, methoxystyrene, α-methyl styrene, vinyl toluene and sodium p-styrene sulfonate; methyl (meth)acrylate, ethyl (meth)acrylate, butyl (meth)acrylate, octyl (meth)acrylate and cyclohexyl (meth)acrylate; esters of (meth)acrylic acid and bicyclic alcohols, such as isobornyl acrylate; perfluoroethylene, perfluoro propylene, and fluoride vinylidene; vinyl trimethoxysilane and vinyl triethoxysilane; and for instance vinyl acetate, vinyl propionate, vinyl n-butyrate, isovinyl butyrate, vinyl pivalate, vinyl caproate, vinyl versatate, vinyl laurate, vinyl stearate, vinyl benzoate, vinyl p-t-butylbenzoate, vinyl salicylate and the like; as well as vinylidene chloride, vinyl chlorohexanecarboxylate and β-methacrolyloyloyloxyethyl hydrogen phthalate.

Examples of polymerizable monomers that tend to exhibit (+) chargeability include methacrylamide, N-methylol methacrylamide, N-methoxyethyl methacrylamide, N-butoxymethyl methacrylamide and the like; alkyl ester derivatives of acrylic acid or methacrylic acid, for instance aminoethyl (meth)acrylate, propyl aminoethyl (meth)acrylate, dimethyl aminoethyl methacrylate, aminopropyl (meth)acrylate, phenyl aminoethyl methacrylate and cyclohexyl aminoethyl methacrylate; vinylamine-based derivatives such as N-vinyl diethylamine and N-acetyl vinylamine; allylamine-based derivatives such as allylamine, methacrylic amine, N-methyl acrylic amine, N,N-dimethyl acrylamide and N,N-dimethyl aminopropyl acrylamide; acrylamide-based derivatives such as acrylamide and N-methyl acrylamide; aminostyrenes such as p-aminostyrene; (meth)acrylamides such as N-methylol (meth)acrylamide and diacetone acrylamide; alkyl ester-based derivatives of acrylic acid or methacrylic acid, for instance 6-aminohexyl succinimide, 2-aminoethyl succinimide, aminoethyl (meth)acrylate, propyl aminoethyl (meth)acrylate, dimethyl aminoethyl methacrylate, aminopropyl (meth)acrylate, phenyl aminoethyl methacrylate and cyclohexyl aminoethyl methacrylate; vinylamine-based derivatives such as N-vinyl diethylamine and N-acetyl vinylamine; allylamine-based derivatives such as allylamine, methacrylic amine, N-methyl acrylic amine, N,N-dimethyl acrylamide and N,N-dimethyl aminopropyl acrylamide; acrylamide-based derivatives such as acrylamide and N-methyl acrylamide; aminostyrenes such as N-aminostyrene; and monomers having ethylenically unsaturated bonds and containing an amino group, such as 6-aminohexyl succinimide and 2-aminoethyl succinimide.

In a case where the particles 55 are produced in accordance with a microchannel production method, for instance the outer shape of the obtained particles 55 and the shape of the interface between the first portion 551 and the second portion 552 can be adjusted through adjustment of, for instance, the confluence direction and rate at the time of confluence of the two types of polymerizable resin component that make up the continuous phases, and the discharge direction or rate during discharge of the continuous phases into the particulate phase. The volume ratios of the first portion 551 and the second portion 552 in the particles 55 illustrated in Figs. 4 to 6 are identical, and the interface of the first portion 551 and the second portion 552 is formed planarly, with the first portion 551 and the second portion 552 constituting respective semispheres, so that the particles 55 as a whole take on a spherical shape.

In a case where the two types of polymerizable resin component that makes up the continuous phases contain a diffusion component, an internal diffusion function can be imparted to the first portion 551 and the second portion 552 of the particles 55. In the particles 55 illustrated in Figs. 4 to 6, the first portion 551 has a first main portion 553 and a first diffusion component 555 dispersed in the first main portion 553. Similarly, the second portion 552 has a second main portion 554 and a second diffusion component 556 dispersed in the second main portion 554. That is, the particles 55 can exhibit a diffusion function with respect to light traveling through the interior of the first portion 551 and with respect to light propagating through the interior of the second portion 552. The first diffusion component 555 and the second diffusion component 556 refer to components capable of eliciting an action of modifying the direction of travel of the light within the particles 55 for instance by reflection or refraction. For example, a light diffusion function (light scattering function) by the first diffusion component 555 and the second diffusion component 556 can be brought out by virtue of the fact that the first diffusion component 555 and the second diffusion component 556 are made up of materials having refractive indices different from the refractive indices of the materials that make up the first main portion 553 and second main portion 554 of the particles 55, or by virtue of the fact that the first diffusion component 555 and the second diffusion component 556 are made up of materials capable of exerting a light reflection action. Examples of the first diffusion component 555 and the second diffusion component 556 having refractive indices different from the refractive indices of the materials that make up the first main portion 553 and second main portion 554 include resin beads, glass beads, porous substances containing a metal compound or a gas, as well as bubbles.

In the first embodiment the outer surface of the particles 55 has a single color.

Specifically, the surfaces of the first portion 551 and the second portion 552 have the same color. The color of the surfaces of the first portion 551 and the second portion 552 can be adjusted through addition of a colorant, such as a pigment or dye, to the first portion 551 and the second portion 552.

The language "single color" in the first embodiment signifies that when the particles 55 rotate within the optical sheet 50 (cavities 56 of the holding layer 54) in a state where no image is displayed on the screen 20, the particles 55 exhibiting a color uniform enough that changes in the color of the display surface 20a of the screen 20 cannot be perceived on the basis of the ordinary observation power of an observer that is observing the display surface 20a of the screen 20. Specifically, the particles 55 can be deemed to be of single color in a case where the color of the display surface 20a of the screen 20 is recognized as identical on the basis of the ordinary observation power of the observer, in a state where no image is displayed on the screen 20, both when the first portion 551 faces the display surface 20a of the screen 20 and when the second portion 552 faces the display surface 20a of the screen 20. More specifically, a color difference ΔE*ab (=[(ΔL*)²+(Δa*)²+(Δb*)²]^{1/2}) between the display surface 20a of the screen 20 at a time where the first portion 551 faces the display surface 20a of the screen 20 and the display surface 20a of the screen 20 at a time where the second portion 552 faces the display surface 20a of the screen 20, is preferably 1.5 or less. The color difference ΔE*ab is a value specified on the basis of the brightness L* and chromaticity a*, b* in the L*a*b* color system, as measured using a color meter (CM-700d, by Konica Minolta, Inc.), according to JIS-Z 8730. In a case where the screen 20 is of reflective type, the color difference ΔE*ab specified on the basis of the brightness L* and chromaticity a*, b* of reflected light is preferably 1.5 or less, while in a case where the screen 20 is of transmissive type, the color difference ΔE*ab specified on the basis of the brightness L* and chromaticity a*, b* of transmitted light is preferably 1.5 or less.

The particle layer 53 can be produced as follows.

Firstly there is produced an ink resulting from dispersing the particles 55 in for instance a polymerizable silicone rubber (material constituting the holding layer 54). Next, the ink is stretched using for instance a coater, and is polymerized for instance through heating, to yield an elastomer sheet. The elastomer sheet is dipped for a given period of time in the insulating liquid 57, as a result of which the elastomer sheet becomes swollen with the insulating liquid 57. Through swelling of the elastomer sheet with the insulating liquid 57, cavities 56 filled with the insulating liquid 57 is formed around the particles 55 included in the elastomer sheet. A particle layer 53 is then formed through application of ultrasonic waves, as desired.

The optical sheet 50 can then be produced through covering of the particle layer 53 by the first substrate 51 and the second substrate 52, and through sealing of the particle layer 53 using for instance a laminate or adhesive. The screen 20 can produced by respectively laying up the first electrode 21 and the second electrode 22, and the first cover layer 23 and the second cover layer 24, in this order, on either face of the optical sheet 50 thus produced.

In the display device 1 according to the first embodiment, coherent light from the coherent light source 11 of the projector 10 is projected on the display surface 20a of the screen 20, through adjustment of the optical path by a scanning device (not shown), so that the coherent light corresponds to the image that is to be displayed on the display surface 20a of the screen 20. The light projected on the display surface 20a of the screen 20 is transmitted through the first cover layer 23 and the first electrode 21, and reaches the optical sheet 50. The light having reached the optical sheet 50 is diffusely reflected by the particles 55, and exits in various directions on the side of the display surface 20a of the screen 20. As a result, there is observed an image corresponding to a region, of the display surface 20a of the screen 20, irradiated by the coherent light. A color image can be displayed on the display surface 20a of the screen 20 in a case where the coherent light source 11 includes a plurality of light sources that emit coherent light of mutually different wavelength regions.

Speckle might however be observed in a case where an image is displayed on the display surface 20a of the screen 20 by coherent light. Conceivable causes of speckle include the generation of an interference pattern on a light sensor surface (retina in humans) after diffusion of coherent light such as laser light on the display surface 20a of the screen 20. In particular, coherent light strikes positions on the screen 20 from a given incidence direction in a case where coherent light is projected on the screen 20 by raster scanning. In a case where raster scanning is resorted to, therefore, speckle wavefronts generated at each point of the screen are immobile unless the screen 20 shakes, and a speckle pattern is viewed by the observer together with the image, whereby the quality of the display image is significantly impaired.

The screen 20 of the display device 1 according to the first embodiment has the first electrode 21 and the second electrode 22 electrically connected to the power source 30, and voltage is applied to the first electrode 21 and the second electrode 22 from the power source 30, as a result of which an electric field is formed in the optical sheet 50 positioned between the first electrode 21 and the second electrode 22. The particles 55 having the first portion 551 and the second portion 552 of mutually different relative permittivity are rotatably held in the particle layer 53 of the optical sheet 50. The particles 55 can generate a dipole moment by being charged, or at least through formation of an electric field in the particle layer 53, as a result of which the particles 55 rotate in accordance with the vector of the electric field formed in the particle layer 53. The diffusion characteristic of the screen 20, i.e. the direction of diffuse light L2 resulting from diffusive reflection of image light L1 projected from the projector 10, varies with time, as illustrated in Figs. 4 to 6, on account of the rotational motion of the particles 55 having the function of modifying the direction of travel of light, for instance a reflection function or a diffusion function. Speckle can be reduced as a result. In the screen 20 of the first embodiment, in particular, the particles 55 are not fixed in the cavities 56, even after repeated rotational motion of the particles 55, by virtue of the fact that the holding layer 54 that holds the particles 55 is swollen with the insulating liquid 57 having a predetermined kinetic viscosity (5.5 mm²/s or less, at 25°C, -20°C and 50°C). In consequence, the speckle reduction effect of the optical sheet 50 of the first embodiment and of the screen 20 in which the optical sheet 50 is used can be maintained over long periods of time.

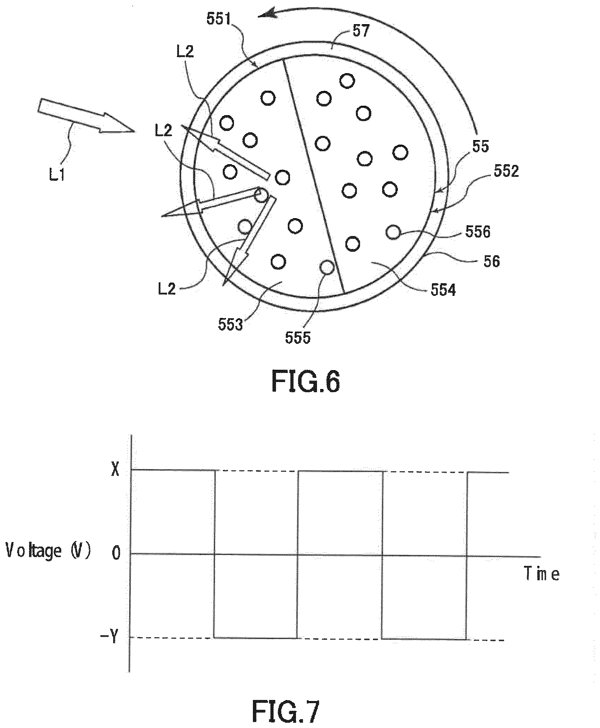

The purpose of the rotational motion of the particles 55 in the first embodiment is to modify the orientation and the position of the particles 55 such that the charge or dipole moment thereof exhibits a stable positional relationship with respect to an electric field vector. Therefore, the rotational motion of the particles 55 is discontinued after a given period of time of ongoing application of a given electric field onto the particle layer 53. On the other hand, rotational motion of the particles 55 must be sustained in order to reduce speckle. Accordingly, the power source 30 applies voltage to the first electrode 21 and the second electrode 22 in accordance with control by the control device 40 such that the electric field (vector) formed in the particle layer 53 varies with time. For instance, the power source 30 applies voltage to the first electrode 21 and the second electrode 22 such that the electric field vector formed in the optical sheet 50 flips every predetermined lapse of time. Specifically, X (V) voltage and -Y (V) voltage are repeatedly applied to the first electrode 21 and the second electrode 22 from the power source 30, as illustrated in Fig. 7. Through such repeated reversal of the electric field (vector) it becomes possible to repeatedly cause the particles 55 to rotate in one direction and in another direction (arrows in Figs. 4 to 6).

The absolute values of the voltages (X (V) and -Y (V)) applied to the first electrode 21 and the second electrode 22 from the power source 30 may be identical or may be different. Herein there may be applied three or more different values of voltage. The applied voltage may vary continuously, for instance by using ordinary AC voltage.

In the screen 20 of the first embodiment, as described above, the holding layer 54 of the particle layer 53 is swollen with the insulating liquid 57 having a predetermined kinetic viscosity (5.5 mm²/s or less, at 25°C, -20°C, 50°C), and the particles 55 are rotatably accommodated in the cavities 56. As a result, a superior speckle reduction effect can be maintained over long periods of time.

### [Second embodiment]

A display device according to a second embodiment will be explained next. In the display device according to the second embodiment features identical to those of the display device according to the first embodiment will be denoted by identical reference symbols, and a detailed explanation thereof will be omitted.

A display device 1' according to the second embodiment has substantially the same configuration as that of the display device 1 according to the first embodiment, except for the fact that a screen 20' is a transmissive screen. Accordingly, the configuration of the screen 20' in the second embodiment will be explained in detail, in particular, centering mainly on the features of particles 55' of the particle layer 53 included in the optical sheet 50.

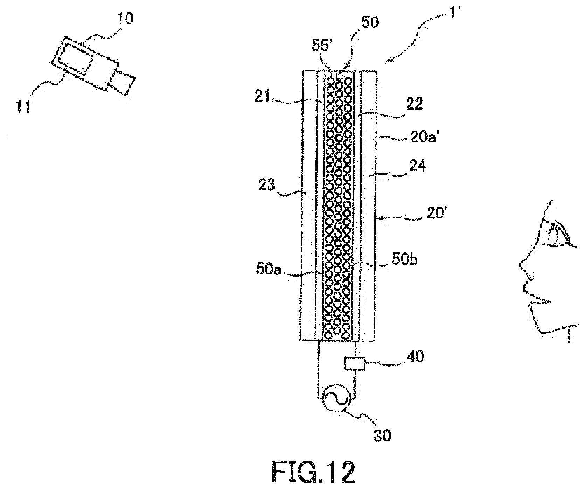

As illustrated in Fig. 12, the display device 1' according to the second embodiment is provided with: a projector 10; a screen 20' onto which image light (light for forming an image) is projected from the projector 10; a power source 30 that applies voltage to the screen 20'; and a control device 40 that controls the voltage applied to the screen 20from the power source 30.

The screen 20' is provided with an optical sheet 50 that has a first surface 50a and a second surface 50b opposing the first surface 50a; a first electrode 21 planarly spread out on the first surface 50a of the optical sheet 50; a second electrode 22 planarly spread out on the second surface 50b of the optical sheet 50; a first cover layer 23 that covers the first electrode 21 and forms one of the outermost surfaces of the screen 20'; and a second cover layer 24 that covers the second electrode 22. The first electrode 21 and the second electrode 22 are electrically connected to the power source 30. The screen 20' may be for instance provided with a Fresnel lens sheet or a linear Fresnel lens sheet (sheet having a substantially serrated shaped lens surface, and having, as desired, a light diffusion surface of random uneven structure on the side facing the lens surface), a lenticular sheet or microlens array sheet (sheet that controls the optical path of incident image light from the projector 10), a black stripe layer or a black matrix layer (layer capable of absorbing for instance external light and being used in combination with a lenticular sheet or a microlens array sheet), a louver film (film capable of absorbing for instance external light and which controls the optical path of incident image light from the projector 10), a light diffusion layer (layer resulting from dispersion of microparticles in an acrylic resin or the like), or a tint layer (layer that absorbs transmitted external light that is incident from the first cover layer 23 side). The screen 20' may be provided with a functional layer such as an anti-reflection layer, as needed.

The screen 20' is a transmissive screen such that when image light is projected on the outer surface of the first cover layer 23 by the projector 10, the image light is transmitted through the first cover layer 23 and the first electrode 21, is diffusely transmitted in the optical sheet 50, and is transmitted through the second electrode 22 and second cover layer 24. An observer facing the display surface 20a' of the screen 20' can observe the image as a result.

The transmittance (visible light transmittance) of the light in the visible light region by the first electrode 21, the second electrode 22, the first cover layer 23 and the second cover layer 24 that transmit the image light through which the image light is transmitted, is preferably 80% or higher, and more preferably 84% or higher. The visible light transmittance in the second embodiment is defined as the average value of transmittance at respective wavelengths, upon measurement in a measurement wavelength range of 380 nm to 780 nm using for instance a spectrophotometer (UV-3100PC, by Shimadzu Corporation).

Examples of the conductive material that makes up the second electrode 22 include ITO (indium tin oxide), InZnO (indium zinc oxide), Ag nanowires and carbon nanotubes. The second cover layer 24 can be for instance made up of a transparent resin such as polyethylene terephthalate, polycarbonate or a cycloolefin polymer having superior stability.

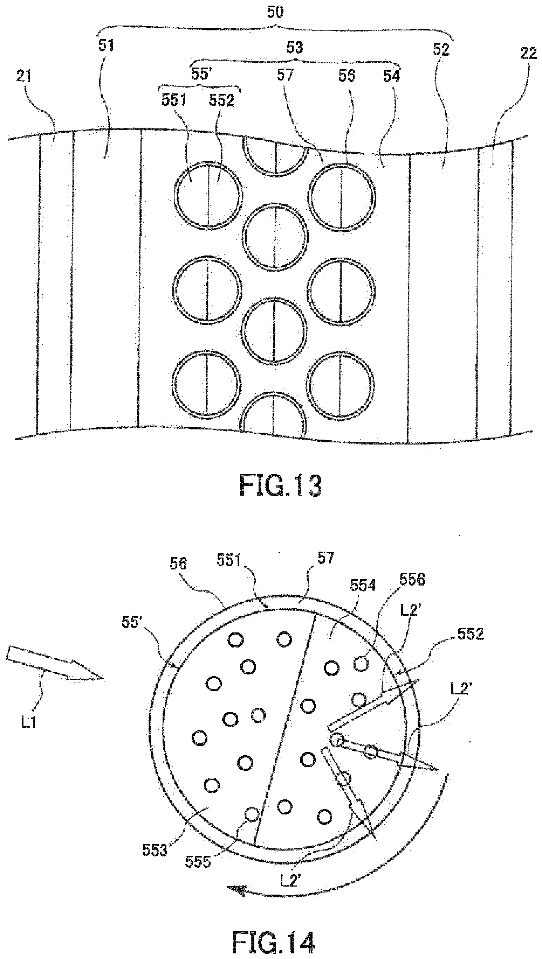

As illustrated in Fig. 13, the optical sheet 50 is provided with a first substrate 51, a second substrate 52, and a particle layer 53 disposed between the first substrate 51 and the second substrate 52. The first substrate 51 supports the first electrode 21, and the second substrate 52 supports the second electrode 22. The particle layer 53 is sealed between the first substrate 51 and the second substrate 52. The first substrate 51 and the second substrate 52 can be made up of a material capable of sealing the particle layer 53 and having enough strength so as to be capable of supporting the first electrode 21 and the second electrode 22. The first substrate 51 and the second substrate 52 can be made up for instance of a polyethylene terephthalate resin film. The screen 20 in the second embodiment is a transmissive screen; herein, the first substrate 51 and the second substrate 52 are transparent enough to enable transmission of image light and diffusively transmitted light, and preferably exhibit visible light transmittance similar to that of the first electrode 21, the second electrode, the first cover layer 23 and the second cover layer 24.

The particles 55' held in the cavities 56 of the holding layer 54 have the function of modifying the direction of travel of the image light that is projected from the projector 10 i.e. the function of diffusely transmitting the image light. The particles 55' contain a first portion 551 and a second portion 552 of mutually different relative permittivity. As a result, a dipole moment is generated within the particles 55', in an electric field. In this case, the particles 55' move so that the vectors of the dipole moment of the particles 55' and the vector of the electric field are antiparallel. Therefore, when voltage is applied across the first electrode 21 and the second electrode 22, and an electric field is formed in the optical sheet 50 positioned between the first electrode 21 and the second electrode 22, the particles 55' rotate within the cavities 56 so as to take on a stable attitude with respect to the electric field (vector). The screen 20 in the second embodiment can modify the diffuse wavefront from the particles 55', which have a light diffusing function, accompanying the rotation of the particles 55'. A speckle reduction effect is thus elicited in the second embodiment by virtue of the fact that the particles 55' rotate on account of the electric field formed in the optical sheet 50, as described below. It suffices accordingly that the relative permittivities of the first portion 551 and the second portion 552 be different enough that the particles 55' can rotate on account of the electric field formed in the optical sheet 50 and a speckle reduction effect is elicited. Whether the relative permittivities of the first portion 551 and the second portion 552 are mutually different or not can be determined on the basis of whether the particles 55' can rotate or not on account of the electric field formed in the optical sheet 50. In the second embodiment, the particles 55' are colorless transparent or colored transparent; in the latter case, the particles 55' have a single color. Specifically, the surfaces of the first portion 551 and the second portion 552 have the same color. The color of the surfaces of the first portion 551 and the second portion 552 can be adjusted through addition of a colorant, such as a pigment or dye, to the first portion 551 and the second portion 552. The particles 55' in the second embodiment is obtained by adjusting the amount of first diffusion component 555 and second diffusion component 556 added to the particles 55' so that transmittance of light incident on the particles 55' is higher than reflectance of light incident on the particles 55'.

In the display device l' according to the second embodiment the coherent light from the coherent light source 11 of the projector 10 is projected on the first cover layer 23 of the screen 20', upon adjustment of the optical path by a scanning device (not shown), so that the coherent light corresponds to the image that is to be displayed on the display surface 20a' of the screen 20'.

The light projected on the first cover layer 23 of the screen 20' is transmitted through the first cover layer 23 and the first electrode 21, and reaches the optical sheet 50. The light having reached the optical sheet 50 is diffusely transmitted by the particles 55', is transmitted through the second electrode 22 and second cover layer 24, and exits in various directions on the side of the display surface 20a' of the screen 20'. As a result, there is observed an image corresponding to a region, of the display surface 20a' of the screen 20', irradiated by the coherent light. A color image can be displayed on the display surface 20a' of the screen 20' in a case where the coherent light source 11 includes a plurality of light sources that emit coherent light of mutually different wavelength regions.

Speckle may be observed in a case where an image is displayed on the display surface 20a' of the screen 20' by coherent light. Conceivable causes of speckle include the generation of an interference pattern on a light sensor surface (retina in humans) after diffusion of coherent light such as laser light onto the display surface 20a' of the screen 20'. In a case where coherent light is projected on the screen 20' by raster scanning, in particular, coherent light strikes positions on the screen 20' from a given incidence direction. In a case where raster scanning is resorted to, therefore, speckle wavefronts generated at each point of the screen do not move so long as the screen 20' does not shake, and the speckle pattern is viewed by the observer together with the image; the quality of the display image becomes thus significantly impaired.

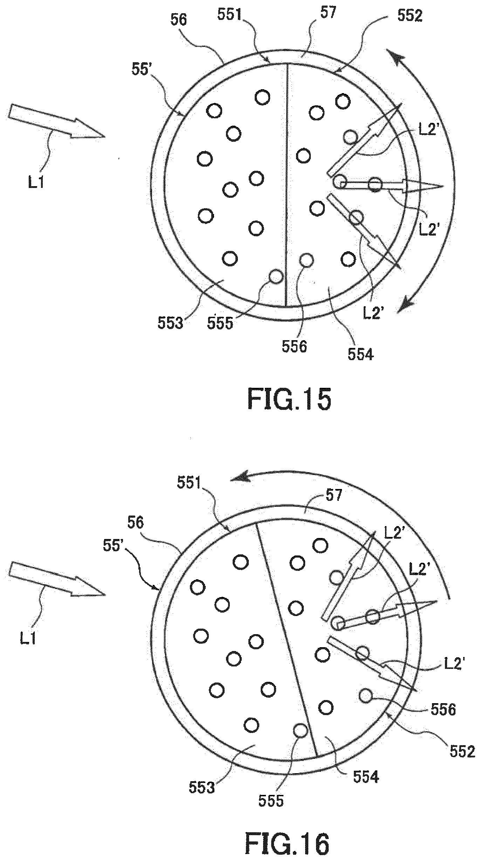

The screen 20' of the display device 1' according to the second embodiment has the first electrode 21 and the second electrode 22 electrically connected to the power source 30, and voltage is applied to the first electrode 21 and the second electrode 22 from the power source 30, as a result of which an electric field is formed in the optical sheet 50 positioned between the first electrode 21 and the second electrode 22. The particles 55' having the first portion 551 and the second portion 552 of mutually different relative permittivity are rotatably held in the particle layer 53 of the optical sheet 50. The particles 55' can generate a dipole moment by being charged or at least through formation of an electric field in the particle layer 53, as a result of which the particles 55 rotate in accordance with the vector of the electric field formed in the particle layer 53. The diffusion characteristic of the screen 20', i.e. the direction of diffuse light L2' resulting from diffusive reflection of the image light L1 projected from the projector 10, varies with time, as illustrated in Figs. 14 to 16, on account of the rotational motion of the particles 55' having a function, for instance a reflection function or a diffusion function, of modifying the direction of travel of light. Speckle can be reduced as a result. In the screen 20' of the second embodiment, in particular, the particles 55' are not fixed to the cavities 56, even after repeated rotational motion of the particles 55', by virtue of the fact that the holding layer 54 that holds the particles 55' is swollen with the insulating liquid 57 having a predetermined kinetic viscosity (5.5 mm²/s or less, at 25°C, -20°C and 50°C). In consequence, the speckle reduction effect of the optical sheet 50 of the second embodiment and of the screen 20' in which the optical sheet 50 is used can be maintained over long periods of time.

The purpose of the rotational motion of the particles 55' of the second embodiment is to modify the orientation and the position of the particles 55' so that the charge or dipole moment thereof exhibits a stable positional relationship with respect to an electric field vector. Therefore, the rotational motion of the particles 55' is stopped after a given period of time of ongoing application of a given electric field onto the particle layer 53. On the other hand, the rotational motion of the particles 55' must be sustained, in order to reduce speckle. Accordingly, the power source 30 applies voltage to the first electrode 21 and the second electrode 22 so that the electric field (vector) formed in the particle layer 53 varies with time, in accordance with control by the control device 40. For instance, the power source 30 applies voltage to the first electrode 21 and the second electrode 22 so that the electric field vector formed in the optical sheet 50 flips every predetermined lapse of time. Specifically, X (V) voltage and -Y (V) voltage are repeatedly applied from the power source 30 to the first electrode 21 and the second electrode 22. Through such repeated reversal (see Fig. 7) of the electric field (vector) it becomes possible to repeatedly cause the particles 55' to rotate in one direction and in another direction (arrows in Figs. 14 to 16).

The absolute values of the voltages (X (V) and -Y (V)) applied to the first electrode 21 and the second electrode 22 from the power source 30 may be identical or may be different. Three or more different values of voltage may be applied herein. The applied voltage may vary continuously, for instance when using ordinary AC voltage.

In the screen 20' of the second embodiment, as described above, the holding layer 54 of the particle layer 53 is swollen with the insulating liquid 57 having a predetermined kinetic viscosity (5.5 mm²/s or less, at 25°C, -20°C, 50°C), and the particles 55' are rotatably accommodated in the cavities 56. A superior speckle reduction effect can be maintained as a result over long periods of time.

The embodiments explained above are described for the purpose of making the present invention easy to grasp, and are not set forth in order to limit the invention in any way. Therefore, the elements described in the embodiments are meant to include all design variations and equivalents belonging to the technical scope of the present invention.

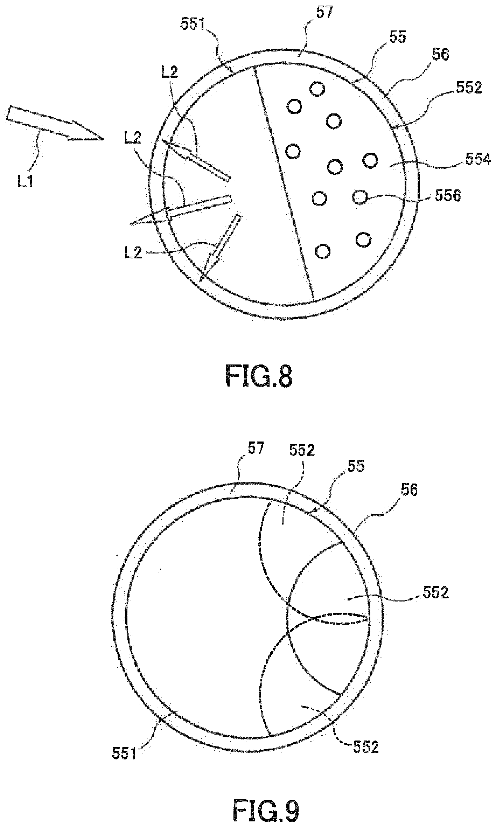

The above embodiments have been explained based on an example of an implementation where the first portion 551 and the second portion 552 of the particles 55 are of identical color, but the invention is not limited to such an implementation. For instance, one among the first portion 551 and the second portion 552 may be transparent. In the example illustrated in Fig. 8 the first portion 551 is transparent. The direction of travel of light incident on the particles 55 can be modified through reflection or refraction at the interface between the first portion 551 and the second portion 552, through diffusion at the second portion 552 or through reflection or refraction at the surface of the particles 55. The color of such particles 55 is grasped herein as the color of the second portion 552, given that the first portion 551 is transparent. Therefore, the color of the display surface 20a of the screen 20 does not vary even when the particles 55 rotate. As a result, it becomes possible to effectively curtail degradation of image quality accompanying color changes in the screen 20, when an image is displayed, without perceiving any change in color in the screen 20.

The above embodiments have been explained on the basis of an example of an implementation where the volume ratios of the first portion 551 and the second portion 552 of the particles 55 are identical, but the invention is not limited to such an implementation. For instance, the volume ratios of the first portion 551 and the second portion 552 may be different. In a case where the volume ratio of the first portion 551 is higher than the volume ratio of the second portion 552, the second portion 552 can be hidden by the first portion 551 when viewed from the observer side along the normal direction of the screen 20, as illustrated in Fig. 9, even if the particles 55 are caused to rotate while light is projected on the screen 20 and the second portion 552 rotates up to the position denoted by the two-dot chain line. Therefore, changes in the color of the screen 20 accompanying the rotational motion of the particles 55 can be effectively suppressed even if the first portion 551 and the second portion 552 are not of identical color.

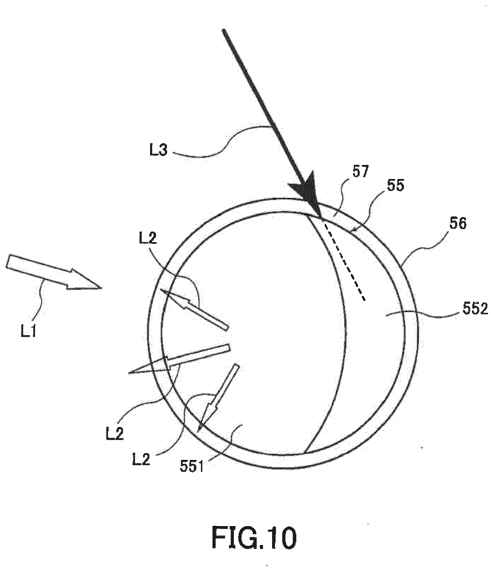

In the above embodiments the second portion 552 may have a light absorption function. In the implementation illustrated in Fig. 10 the first portion 551 has a light diffusion function and the second portion 552 has a light absorption function. The light absorption function of the second portion 552 can be brought out for instance in that the second portion 552 contains a light-absorbing colorant (carbon black or a pigment such as titanium black). Light L3 striking the particles 55 from a direction different from that of the image light L1 from the projector 10 can be absorbed by the second portion 552. The contrast of the image displayed on the display surface 20a of the screen 20 can thus be improved, without loss of brightness in the image, by virtue of the fact that the second portion 552 selectively absorbs the light L3, other than the image light L1, that is incident on the screen 20.

The above embodiments have been explained on the basis of a reflection-type screen 20, but the invention is not limited to such an implementation, and for instance the screen may be a transmissive screen 20. In a transmissive screen 20 the second electrode 22, the second cover layer 24 and the second substrate 52 can be transparent similarly to the first electrode 21, the first cover layer 23 and the first substrate 51, i.e. can be made up of materials having visible light transmittance, similarly to the foregoing. Preferably, the size and amount of the first and second diffusion components 555, 556 included in the particles 55 are adjusted so that the transmittance of light incident on the particles 55 is higher than reflectance of light incident on the particles 55.

The above embodiments have been explained by way of examples in which the charged particles 55 are produced using monomers having (+) chargeability and monomers having (-) chargeability, but the invention is not limited to such an implementation. For instance, the particles 55 may be produced by laying up two layers of plate-like bodies made up of materials having mutually different chargeability, and by pulverizing the resulting stack to a desired size. Examples of materials having chargeability include synthetic resin materials resulting from addition of a charge control agent (for instance an ion conductivity-imparting agent obtained by compositing for instance lithium perchlorate with a polymer having, as a main component, polyalkylene glycol used as an antistatic agent).

The above embodiments have been explained with spherical particles 55 as an example, but the invention is not limited thereto. Examples of the shape of the particles 55 include also spheroid, cubic, rectangular parallelepiped, conical and cylindrical shapes. By using particles 55 having an outer shape other than spherical, and thereby causing the particles 55 to move, it becomes possible to suppress changes in the diffusion characteristic of the screen 20 over time on account of surface reflection at the particles 55, regardless of the internal diffusion capacity of the particles 55.

The above embodiments have been explained by way of examples of a structure in which the first cover layer 23, the first electrode 21, the optical sheet 50 and the second electrode 22 and second cover layer 24 are laid up in this order, as the multilayer structure of the screen 20, but the invention is not limited thereto. For instance, a functional layer having for example an anti-reflection (AR) function, a hard coating (HC) function, an ultraviolet shielding (reflection) function or an antifouling function may be provided separately, in such a manner that at least any one from among the first cover layer 23, the second cover layer 24, the first substrate 51 and the second substrate 52 have the above functions.

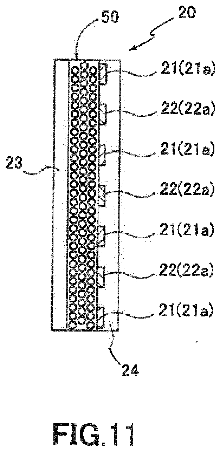

The above embodiments have been explained on the basis of an example of an implementation in which the first electrode 21 and the second electrode 22 are formed planarly on the first substrate 51 and the second substrate 52, respectively, but the invention is not limited thereto. For instance, both the first electrode 21 and the second electrode 22 may have a plurality of stripe-shaped electrodes 21a, 22a and be disposed on the second substrate 52, as illustrated in Fig. 11.

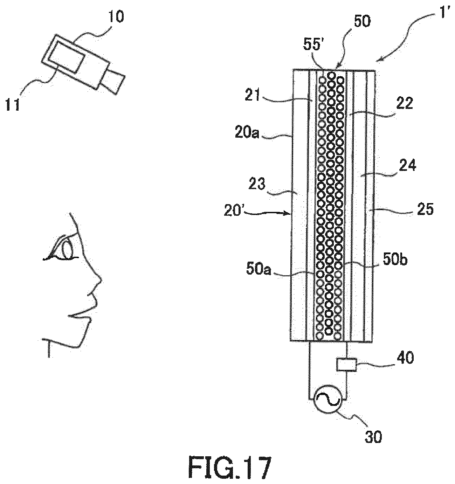

The second embodiment has been explained on the basis of an example of the transmission-type display device 1' having the transmissive screen 20', but the invention is not limited thereto, and the display device may be a reflective display device having the above transmissive screen 20'. For instance, the reflective display device can be provided with a reflective member 25 made up for instance of a reflective plate or a reflective film, provided on the second cover layer 24 of the screen 20', as illustrated in Fig. 17.

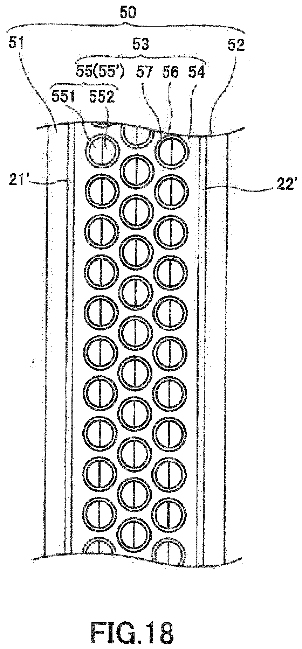

In the first and second embodiments, the screen 20, 20', may have a configuration wherein, as illustrated in Fig. 18, the first substrate 51 of the optical sheet 50 has the electrode material layer 21' on one surface, and the second substrate 52 has the electrode material layer 22' on one surface, and the particle layer 53 is sealed by the first substrate 51, the second substrate 52 and a frame-shaped spacer member 58, in such a manner that the electrode material layers 21', 22' face the particle layer 53. In a screen 20, 20' having such a configuration, the electrode material layers 21', 22' function concurrently as the first electrode 21 and the second electrode 22, and the first substrate 51 and the second substrate 52 function concurrently as the first cover layer 23 and the second cover layer 24, and as a result the first electrode 21, the second electrode 22, the first cover layer 23 and the second cover layer 24 can be omitted.

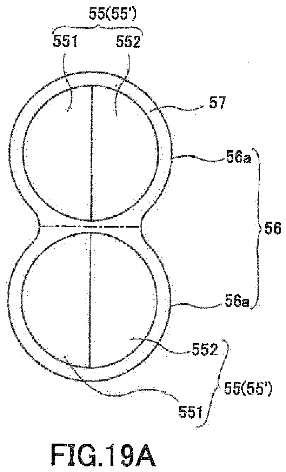

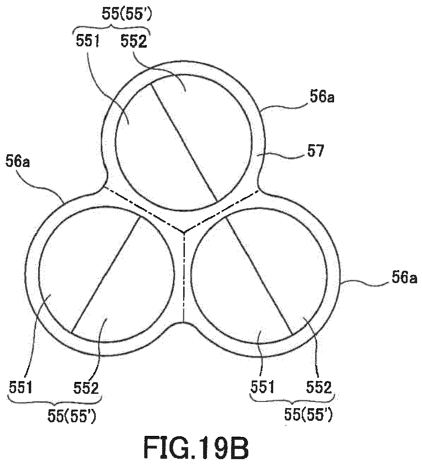

In the first and second embodiments, as illustrated in Fig. 19A and Fig. 19B, at least two cavities 56a (two cavities 56a in Fig. 19A; three cavities 56a in Fig. 19B) may be contiguous to each other, thereby forming one cavity 56. In this case one given particle 55, 55' may be accommodated in one cavity 56a, and be held so as not to be capable of moving to another contiguous cavity 56a. Examples

The present invention will be explained in detail next on the basis of an example, but the present invention is not meant to be limited in any way to the examples below.

### [Example 1]

### [Production of particles 55]

There were prepared monomer composition A for production the first portion 551 of the particles 55 and monomer composition B for producing the second portion 552.

**<Monomer composition A>**

| | |
|---|---|
| Isobornyl acrylate | 68parts by mass |
| Trimethylolpropane triacrylate | 28 parts by mass |
| Acrylic acid | 2 parts by mass |
| Lauryl peroxide | 5 parts by mass |
| Titanium oxide (Ishihara Sangyo Kaisha, Ltd, product name: R-680) | 30 parts by mass |
| Polyester-based pigment stablizer (product name: Solsperse 36000, by the Lubrizol Corporation) | 0.5 parts by mass |

**<Monomer composition B>**

| | |
|---|---|
| Isobornyl acrylate | 69 parts by mass |
| Trimethylolpropane triacrylate | 30 parts by mass |
| Dimethyl aminoethylmethacrylate | 1 part by mass |
| Lauryl peroxide | 5 parts by mass |
| Polyester-based pigment stabilizer (product name: Solsperse 36000, by the Lubrizol Corporation) | 0.5 parts by mass |

Particles 55 were produced in accordance with the microchannel method, using a monomer composition A and monomer composition B above, and a polyvinyl alcohol aqueous solution as a flowable medium. Specifically, a third microchannel and a fourth microchannel were joined so as to form a V-shape, the monomer composition A was caused to flow into the third microchannel, and the monomer composition B into the fourth microchannel. Continuous phases resulting from separation into two phases, namely a monomer composition A phase and a monomer composition B phase prepared through confluence of the monomer composition A and the monomer composition B through the third and the fourth microchannels, were fed into a first microchannel, and were discharged intermittently into a second microchannel through which there flowed a flowable medium (polyvinyl alcohol aqueous solution), to elicit particle formation. Then the particles flowing through the second microchannel were irradiated with UV, to polymerize thereby the monomer composition A and the monomer composition B, and produce as a result the particles 55.

### [Production of the optical sheet 50]

The particles 55 obtained as described above were dispersed in a mixture of a main agent of silicone elastomer, a curing agent and an organic solvent, to thereby produce an ink, and the ink was spread using a bar coater and was heat-polymerized, to yield an elastomer sheet. The elastomer sheet was swollen by being immersed, for a given lapse of time, in a silicone oil (kinetic viscosity at 25°C: 0.79 mm²/s) resulting from mixing a polydimethylsiloxane (KF-96-0.65CS, by Shin-Etsu Chemical Co., Ltd.) and a modified silicone (X-22-160AS, by Shin-Etsu Chemical Co., Ltd.), at 95:5 (mass ratio). Ultrasonic waves were applied to the elastomer sheet swollen with silicone oil, to thereby produce a particle layer 53. The particle layer 53 was covered with a first substrate 51 and a second substrate 52 made up of a PET/polypropylene composite film, and the particle layer 53 was sealed by lamination, to thereby produce an optical sheet 50.

### [Production of a screen 20]

A first electrode 21 and second electrode 22 containing carbon nanotubes (CNT) and a first cover layer 23 and a second cover layer 24 made up of a PET film were laid up in this order on either face of the optical sheet 50 obtained as described above, to thereby produce a screen 20.

### [Example 2]

A screen 20 was produced in the same way as in Example 1, but using herein a silicone oil (kinetic viscosity at 25°C: 1.19 mm²/s) prepared by changing the mixing ratio (mass ratio) of a polydimethylsiloxane (KF-96-1CS, by Shin-Etsu Chemical Co., Ltd.) and modified silicone to 95:5.

### [Example 3]

A screen 20 was produced in the same way as in Example 1, but using herein a silicone oil (kinetic viscosity at 25°C: 2.30 mm²/s) prepared by changing the mixing ratio (mass ratio) of a polydimethylsiloxane (KF-96-2CS, by Shin-Etsu Chemical Co., Ltd.) and modified silicone to 95:5.

### [Example 4]

A screen 20 was produced in the same way as in Example 1, but using herein a silicone oil (kinetic viscosity at 25°C: 5.50 mm²/s) prepared by changing the mixing ratio (mass ratio) of a polydimethylsiloxane (KF-96-5CS, by Shin-Etsu Chemical Co., Ltd.) and modified silicone to 95:5.

### [Example 5]

### [Production of particles 55']

There were prepared monomer composition A' for production the first portion 551 of the particles 55' and monomer composition B' for producing the second portion 552.

**<Monomer composition A'>**

| | |
|---|---|
| Isobornyl acrylate | 68 parts by mass |
| Trimethylolpropane triacrylate | 28 parts by mass |
| Acrylic acid 2 parts | by mass |
| Lauryl peroxide | 5 parts by mass |
| Polystyrene beads (by Sumitomo Plastics, product name: SBX-4) | 10 parts by mass |

**<Monomer composition B'>**

| | |
|---|---|
| Isobornyl acrylate | 69 parts by mass |
| Trimethylolpropane triacrylate | 30 parts by mass |
| Dimethyl aminoethyl methacrylate | 1 part by mass |
| Lauryl peroxide | 5 parts by mass |
| Polystyrene beads (by Sumitomo Plastics, product name: SBX-4) | 10 parts by mass |

Particles 55' were produced in accordance with the microchannel method, using the monomer composition A' and monomer composition B' above, and a polyvinyl alcohol aqueous solution as a flowable medium. Specifically, a third microchannel and a fourth microchannel were joined so as to form a V-shape, the monomer composition A' was caused to flow through the third microchannel, and the monomer composition B' through the fourth microchannel. Continuous phases resulting from separation into two phases, namely a monomer composition A' phase and a monomer composition B' phase prepared as a result of confluence of the monomer composition A' and the monomer composition B' through the third and the fourth microchannels, were fed into a first microchannel, and were discharged intermittently into a second microchannel through which there flowed a flowable medium (polyvinyl alcohol aqueous solution), to elicit particle formation.

Then the particles flowing through the second microchannel were irradiated with UV, to polymerize thereby the monomer composition A' and the monomer composition B', and produce as a result the particles 55'.

### [Production of a screen 20']

As described above, the particles 55' obtained as described above were dispersed in a mixture of a main agent of silicone elastomer, as well as a curing agent and an organic solvent, to thereby produce an ink, the ink was spread using a bar coater, and was heat-polymerized, to yield an elastomer sheet. The elastomer sheet was swollen by being immersed, for a given lapse of time, in a polydimethylsiloxane (KF-96-0.65CS, by Shin-Etsu Chemical Co., Ltd.: kinetic viscosity at 25°C: 0.65 mm²/s, kinetic viscosity at -20°C: 1.9 mm²/s). Ultrasonic waves were applied to the elastomer sheet swollen with polydimethylsiloxane, to thereby produce a particle layer 53. Then ITO was formed on PET films as the first substrate 51 and the second substrate 52, to thereby form electrode material layers 21', 22', and the particle layer 53 was sealed with a frame-shaped spacer member made up of a PET film having a pressure-sensitive adhesive layer, on the first substrate 51 and second substrate 52, and both faces, in such a way as to cause the electrode material layers 21', 22' to abut the particle layer 53, to produce a screen 20' as a result.

### [Example 6]

A screen 20' was produced in the same way as in Example 5, using a polydimethylsiloxane (KF-96-1CS, by Shin-Etsu Chemical Co., Ltd.: kinetic viscosity at 25°C: 1.0 mm2/s, kinetic viscosity at -20°C: 2.9 mm²/s).

### [Example 7]

A screen 20' was produced in the same way as in Example 5, but using herein a mineral oil-based processing oil (METAL WORK HS, by JXTG Nippon Oil & Energy Corporation: kinetic viscosity at 25°C: 4.1 mm²/s).

### [Example 8]

A screen 20' was produced in the same way as in Example 5, but herein by sequentially providing a louver film and a linear Fresnel lens on the first cover layer 23, and sequentially providing, on the second cover layer 24, a light diffusion layer resulting from dispersion of microparticles in an acrylic resin, and a tint layer resulting from dispersion of a colorant in an acrylic resin. The linear Fresnel lens had a lens surface having a serrated cross section and positioned on the first cover layer 23 side, and a light diffusion surface of random uneven structure opposing the lens surface.

### [Example 9]

A screen 20' was produced in the same way as in Example 6 but by sequentially providing herein a louver film and a linear Fresnel lens on the first cover layer 23 and sequentially providing a light diffusion layer resulting from dispersion of microparticles in an acrylic resin, and a tint layer resulting from dispersion of a colorant in an acrylic resin, on the second cover layer 24. The linear Fresnel lens had a lens surface having a serrated cross section and positioned on the first cover layer 23 side, and a light diffusion surface of random uneven structure opposing the lens surface.

### [Example 10]

A screen 20' was produced in the same way as in Example 5, but herein a durable mirror film (model: 1-2926-01) was provided on the second cover layer 24.

### [Example 11]

A screen 20' was produced in the same way as in Example 5, using a polydimethylsiloxane (KF-96-1.5CS, by Shin-Etsu Chemical Co., Ltd.: kinetic viscosity at 25°C: 1.5 mm²/s, kinetic viscosity at -20°C: 4.3 mm²/s).

### [Reference example 1]

A screen 20' was produced in the same way as in Example 5, using a polydimethylsiloxane (product name: KF-96-2CS, by Shin-Etsu Chemical Co., Ltd.: kinetic viscosity at 25°C: 2.0 mm²/s, kinetic viscosity at -20°C: 5.7 mm²/s).

### [Test example 1] Measurement of speckle contrast

Laser light emitted from a DPSS laser oscillator (oscillation wavelength 532 nm) as a measurement coherent light source 11 of speckle contrast was converted to a spherical wave by means of a spatial filter, the spherical wave was converted to a plane wave via a convex lens, and was then projected to the screens of Examples 1 to 4. A speckle contrast measuring instrument (SM01VS09, by Oxide Corporation) was disposed at a position spaced from the screen by 0.6 m, on the light source side, in a direction at 20 degrees with respect to the normal direction of the screen; speckle contrast (Cs(on), Cs(off)) at the time of application of voltage (square wave having an amplitude of ±100 V and frequency of 30 Hz) on the screen and at a time of no voltage application, was measured according to IEC 62906-5-2, and a speckle reduction rate (1-[Cs(on)/Cs(off)]) was calculated. The results are given in Table 1.

**[Table 1]**

| | Kinetic viscosity (mm²/s) of insulating solvent | Cs (off) | Cs (on) | Reduction rate |
|---|---|---|---|---|
| Example 1 | 0.79 | 0.464 | 0.089 | 0.81 |
| Example 2 | 1.19 | 0.465 | 0.144 | 0.69 |
| Example 3 | 2.30 | 0.469 | 0.189 | 0.60 |
| Example 4 | 5.50 | 0.456 | 0.236 | 0.48 |

The results in Table 1 revealed that speckle can be reduced by virtue of the fact that the kinetic viscosity (25°C) of the insulating liquid 57 (silicone oil) that swells the holding layer 54 was 5.5 mm²/s or less. The reduction in speckle could be confirmed also by visual inspection. The visual speckle reduction effect became more pronounced the higher the speckle reduction rate was.

### [Test example 2] Measurement of speckle contrast

Laser light emitted from a DPSS laser oscillator (oscillation wavelength 532 nm) as a measurement coherent light source 11 of speckle contrast was converted to a spherical wave using a spatial filter, the spherical wave was converted to a plane wave via a convex lens, and was then projected to the screens 20' of Examples 5 to 10, on the first electrode 21 side. In Examples 5 to 9, a speckle contrast measuring instrument (SM01VS09, by Oxide Corporation) was disposed at a position spaced from the screen 20' by 0.6 m on each second electrode 22 side, in a direction at 20 degrees with respect to the normal direction of the screen 20', and in Example 10, the speckle contrast measuring instrument was disposed at a position spaced from the screen 20' by 0.6 m on the first electrode 21 (light source) side, in a direction at 20 degrees with respect to the normal direction of the screen 20'. Speckle contrast (Cs(on), Cs(off)) at the time of application of voltage (square wave having an amplitude of ±100 V and frequency of 30 Hz) on the screen 20' and at a time of no voltage application, was measured according to IEC 62906-5-2, and a speckle reduction rate (1-[Cs(on)/Cs(off)]) was calculated. The results are given in Table 2.

**[Table 2]**

| | Kinetic viscosity (mm²/s) of insulating solvent | Cs (off) | Cs (on) | Reduction rate |
|---|---|---|---|---|
| Example 5 | 0.65 | 0.87 | 0.20 | 0.77 |
| Example 6 | 1.00 | 0.86 | 0.25 | 0.71 |
| Example 7 | 4.10 | 0.95 | 0.74 | 0.22 |
| Example 8 | 0.65 | 0.64 | 0.37 | 0.42 |
| Example 9 | 1.00 | 0.65 | 0.37 | 0.43 |
| Example 10 | 0.65 | 0.53 | 0.09 | 0.83 |

The results in Table 2 revealed that speckle can be reduced also in the transmissive screen 20'. It was found that the speckle reduction effect was excellent in a reflective display device (Example 10) where the transmissive screen 20' and a reflective film were used.

### [Test example 3]

### Reliability test

Voltage was applied continuously (applied voltage conditions identical to those of Test example 1) for 1000 hours to the screens of Examples 1 to 4, after which each screen was observed visually. As a result, it was found that the speckle reduction effect was comparable to that elicited immediately following application of voltage. Such being the case, it is deemed that the speckle reduction effect can be sustained over long periods of time, without fixing of the particles 55, in the screens of Examples 1 to 4.

### [Test example 4]

### Checking of speckle reduction effect

A laser scanning projector (PicoPro, by Celluon Inc.) as a test coherent light source 11, the screens 20' of Example 5, Example 6, Example 11 and Reference example 1, and a drive circuit (which outputted a square wave of amplitude ±180 V, frequency 30 Hz and duty ratio 50%) for applying voltage to the screen 20', were accommodated in a reach-in freezer showcase (FS-63ZT3, by Hoshizaki Corporation)(temperature in the showcase: -20°C). Once 2 hours had elapsed since the laser scanning projector, the screen 20' and the drive circuit had been accommodated inside the reach-in freezer showcase, laser light emitted from the laser scanning projector was projected onto the first electrode 21 side of the screen 20' having voltage applied thereto by the drive circuit, and the image displayed on the display surface 20a' of the screen 20' was visually observed via a glass door of the reach-in freezer showcase. The results revealed that speckle could be reduced also in the above low-temperature (-20°C) environment by virtue of the fact that the kinetic viscosity at low temperature (-20°C) of the insulating liquid 57 was 5.5 mm²/s or less in the screens 20' of Example 5, Example 6 and Example 11. By contrast, no speckle reduction effect was observed in the screen 20' of Reference example 1.

### [Test example 5]

### Reliability test

Voltage was continuously applied for 3000 hours (applied voltage conditions identical to those of Test example 4) to the screens 20' in Example 5, Example 6 and Example 11, after which each screen 20' was observed visually. As a result, it was found that the speckle reduction effect was comparable to that immediately following application of voltage. Such being the case, it is deemed that a speckle reduction effect can be sustained over long periods of time, without fixing of the particles 55', also in a low-temperature (-20°C) environment, in the screens 20' of Example 5, Example 6 and Example 11.

### [Reference Signs List]

- 1, 1': Display device
- 10: Projector
- 11: Coherent light source
- 20, 20': Screen
- 21: First electrode
- 22: Second electrode
- 23: First cover layer
- 24: Second cover layer
- 50: Optical sheet
- 51: First substrate
- 52: Second substrate
- 53: Particle layer
- 54: Holding layer
- 55, 55': Particle
- 551: First portion
- 552: Second portion
- 56: Cavity
- 57: Insulating liquid

## Claims

1. An optical sheet used in a screen that is capable of displaying an image by being irradiated with light, the optical sheet comprising:
a particle layer having an insulating liquid, a holding layer, and a plurality of particles held rotatably in the holding layer,
wherein the particles include a first portion and a second portion, and are held in the holding layer so that the insulating liquid is present around the particles, and
the kinetic viscosity at 25°C of the insulating liquid is 5.5 mm²/s or less.

2. An optical sheet used in a screen that is capable of displaying an image by being irradiated with light, the optical sheet comprising:
a particle layer having an insulating liquid, a holding layer, and a plurality of particles held rotatably in the holding layer,
wherein the particles include a first polymer portion as a first portion and a second polymer portion as a second portion, the particles being held in the holding layer so that the insulating liquid is present around the particles, and
the kinetic viscosity at 25°C of the insulating liquid is 5.5 mm²/s or less.

3. An optical sheet used in a screen that is capable of displaying an image by being irradiated with light, the optical sheet comprising:
a particle layer having an insulating liquid, a holding layer, and a plurality of particles held rotatably in the holding layer,
wherein the particles include a first portion and a second portion, and are held in the holding layer so that the insulating liquid is present around the particles, and
the kinetic viscosity of the insulating liquid at a use temperature of the optical sheet is 5.5 mm²/s or less.

4. An optical sheet used in a screen that is capable of displaying an image by being irradiated with light, the optical sheet comprising:
a particle layer having an insulating liquid, a holding layer, and a plurality of particles held rotatably in the holding layer,
wherein the particles include a first polymer portion as a first portion and a second polymer portion as a second portion, the particles being held in the holding layer so that the insulating liquid is present around the particles, and
the kinetic viscosity of the insulating liquid at a use temperature of the optical sheet is 5.5 mm²/s or less.

5. The optical sheet according to any one of claims 1 to 4, wherein the first portion and the second portion have mutually different relative permittivity.

6. The optical sheet according to claim 3 or 4, wherein the use temperature of the optical sheet is -20°C.

7. The optical sheet according to claim 3 or 4, wherein the use temperature of the optical sheet is 50°C.

8. The optical sheet according to any one of claims 1 to 7, wherein the kinetic viscosity of the insulating liquid is 0.65 mm²/s to 5.5 mm²/s.

9. The optical sheet according to any one of claims 1 to 8, wherein the holding layer includes a plurality of holding sections that rotatably hold the plurality of particles, respectively.

10. The optical sheet according to any one of claims 1 to 9, wherein the particles are of single color.

11. The optical sheet according to any one of claims 1 to 10, wherein either or both of the first portion and the second portion of the particles are transparent.

12. The optical sheet according to any one of claims 1 to 11, wherein the volume ratio of the first portion of the particles is higher than the volume ratio of the second portion of the particles.

13. The optical sheet according to claim 12,
wherein the first portion of the particles has a light diffusion function, and
the second portion of the particles has a light absorption function.

14. A screen, comprising:
the optical sheet according to any one of claims 1 to 13; and
electrodes that are applied with voltage to thereby form an electric field for causing the particles to rotate.

15. A display device, comprising:
a projector that emits coherent light; and
the screen according to claim 14.

16. The display device according to claim 15, further comprising:
a power source for applying voltage to the electrodes of the screen; and
a control device that controls the voltage applied to the electrodes from the power source.

17. The display device according to claim 16, wherein the control device controls the voltage applied to the electrodes from the power source so that the particles are caused to rotate repeatedly within a range of a rotation angle of the particles of smaller than 180°.

18. The display device according to claim 16 or 17, wherein the control device controls the orientation and/or position of the particles on the basis of voltage applied to the electrodes from the power source, so that at least part of the second portion is covered by the first portion, as viewed from an observer side in the normal direction of the screen.
